(19) Europäisches Patentamt
European Patent Office
Office européen des brevets

(11) Publication number: **0 118 278 A1**

(12) # EUROPEAN PATENT APPLICATION

(21) Application number: 84301283.2

(22) Date of filing: 28.02.84

(51) Int. Cl.³: F 16 C 32/06
F 16 C 32/00

(30) Priority: 28.02.83 US 470668
21.02.84 US 581748

(43) Date of publication of application:
12.09.84 Bulletin 84/37

(84) Designated Contracting States:
DE FR GB

(71) Applicant: International Business Machines Corporation
Old Orchard Road
Armonk, N.Y. 10504(US)

(72) Inventor: Chainer, Timothy J.
Barrett Hill Road
Mahopac New York 10541(US)

(72) Inventor: Engwall, Mats Anders
1551 Sunset Drive
Hollister California 95023(US)

(72) Inventor: Scranton, Robert A.
Orchard Drive
South Salem New York 10590(US)

(72) Inventor: Thompson, David A.
Twin Lakes Road
South Salem New York 10590(US)

(74) Representative: Hobbs, Francis John
IBM United Kingdom Patent Operations Hursley Park
Winchester, Hants, SO21 2JN(GB)

(54) **Squeeze bearing assemblies.**

(57) The bearing members (22, 28) of a squeeze bearing assembly have non-circular facing surfaces (26, 32) to restrain rotational movement of the bearing members relative to one another and provide torsional stiffness in the bearing assembly.

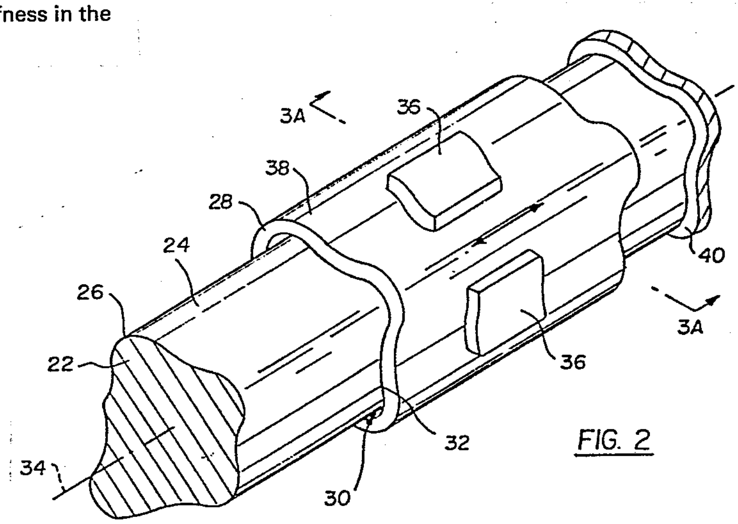


FIG. 2

EP 0 118 278 A1

Croydon Printing Company Ltd.

# SQUEEZE BEARING ASSEMBLIES

The present invention is concerned with squeeze bearing assemblies in which relative radial vibration is induced between a rod-like bearing member and a surrounding sleeve-like bearing member to compress and decompress a thin film of gas or liquid between the bearing members and create a squeeze bearing effect which permits nearly fictionless relative linear movement of the bearing members.

The article entitled "Compressible Squeeze Films and Squeeze Bearings" by E O Salbu in the June 6, 1964 issue of the Transactions of the ASME Journal of Basic Engineering is an excellent basic reference for an understanding of the squeeze bearing technology. Since the publication of that article, various bearing assemblies have been proposed and used which rely on the basic squeeze bearing principle.

Recently, tubular or cylindrical squeeze bearing assemblies have been suggested for the magnetic transducer carriage assembly of the transducer positioning system of a magnetic disk data storage file. The function of such a positioning system record is to move a magnetic transducer quickly and accurately to a position opposite a particular track on a magnetic disk. The positioning operation involves linear movement of the transducer head over a range of travel of about 2.5 to 5 cm, with very high accuracy. The transducer head is mounted on an arm that is generally attached to the movable coil of a voice coil actuator. The coil and arm are attached to a carriage assembly which functions to precisely guide the head and coil as they are moved along a linear path between tracks. The distance between the head and the disk must be accurately controlled since this distance is critical to the successful recording of data on and reading of data from the disk. It is also important that the recording gap of the magnetic head assume a constant angle to the centre line of the track if data is to be written and read accurately.

Prior art tubular type squeeze bearing assemblies generally permit the necessary single degree of translatory movement across a disk without substantial static friction problems; however, it has been found that substantial modifications to such assemblies are necessary to impose a certain rotational or torsional stiffness on the bearing and to improve the pitch and yaw characteristics of the bearing.

Figure 1 of the present application shows a perspective view of a known type of squeeze bearing assembly 10. Such a bearing comprises a rod-like bearing member 12 of right circular cylindrical configuration which may be made from a suitable material such as stainless steel. Surrounding bearing member 12 is a sleeve-like bearing member 14 which may be made from a tube of piezoelectric material such as lead zirconate titanate ceramic (PZT) supported on an inner tube of molybdenum to form a bender element transducer. In a typical application, the radial clearance between bearing members 12 and 14 would be approximately 0.001 cm. A pair of metallic film electrodes 16 are applied to the exterior surface of sleeve-like bearing member 14 and connected to a source or alternating electrical power 18 by means of suitable conductors 20. When power source 18 is activated, sleeve-like bearing member 14 oscillates radially in and out so that the air or other gas or liquid in the small annular space between bearing members 12 and 14 is alternately compressed and decompressed to produce the squeeze bearing effect. Such bearings are stable against displacement along the illustrated Y and Z axes, against yaw about the Z axis and against pitch about the Y axis. They permit relative translation of bearing members 12 and 14 along the X axis but, unfortunately, also permit relative rotation or roll of members 12 and 14 about the X axis.

When such prior art squeeze bearings are used to mount a carriage for the transducer heads in a magnetic disk data storage file, it is highly desirable that the carriage for the transducer heads be able to move very accurately over a limited range and that the transducer heads remain in a substantially constant plane close to and parallel with the surface of the disk. Thus, it is desirable to prevent roll of the bearing members supporting the transducer heads about their axis of movement. Various techniques have been developed for achieving this goal. Typically, such techniques have involved the use of rather complex combinations of spaced cylindrical and flat squeeze bearings or conventional bearings. So, a need has continued to exist for a simple, very low friction squeeze bearing assembly which has rotational or torsional stiffness.

The present invention seeks to provide an improved squeeze bearing assembly having a rotational restraint which virtually eliminates relative roll between the rod-like and sleeve-like bearing members.

According to one aspect of the invention, we provide a squeeze bearing assembly comprising first and second coaxially arranged bearing members the first bearing member being disposed within the second bearing member, and means to cause relative vibration of the first and second bearing members characterised by the bearing members having opposed surfaces of non-circular cross-section to cause the squeeze film created between the bearing members to restrain relative rotation of the bearing members about their common axis.

According to another aspect of the invention, we provide a squeeze bearing assembly comprising a sleeve-like bearing member having a bore with a non-circular interior perimeter and an axis extending through the bore; a rod-like bearing member having a non-circular exterior perimeter, the rod-like bearing member extending through the bore; and means for causing sufficient relative radial vibration between the sleeve-like bearing member and the rod-like bearing member, to cause fluid in the clearance between the bearing members alternately to be compressed and decompressed and thereby generate a load supporting force in the squeeze bearing defined between the bearing members.

The necessary relative radial vibration between the bearing members can be established using piezoelectric, electrostrictive, magnetostrictive or electromagnetic transducers.

Only a single rod-like bearing member and a single sleeve-like bearing member are required to provide the desired squeeze bearing effect and the desired rotational restraint.

In this specification, the term "cylinder" and "cylindrical" refer to a surface traced by any straight line moving parallel to a first straight line and intersecting a fixed closed curve. Such a curve need not be circular for a true cylinder to be defined. Of course, those skilled in the art will appreciate that the exterior surface of the rod-like bearing member and the interior surface of the sleeve-like bearing member need not be perfectly cylindrical at all locations around their perimeters, as will be discussed further in this specification.

A squeeze bearing assembly embodying the invention comprises a sleeve-like bearing member having an at least partially cylindrical interior bore with a non-circular interior perimeter and an axis extending through the bore. A rod-like bearing member extends through the interior bore of the sleeve-like bearing member and comprises an at least partially cylindrical exterior surface having a non-circular exterior perimeter. Means such as at least one piezoelectric transducer mounted on or comprising part of either the sleeve-like bearing member or the rod-like bearing member, are provided for causing sufficient relative radial vibration between the sleeve-like bearing member and the rod-like bearing member to cause the fluid in the clearance between the bearing members alternately to be compressed and decompressed. As a result, a load supporting force is generated in the squeeze bearing defined between the bearing members. Significantly, due to the non-circular perimeters of the bearing members, relative rotation between the bearing members about their common axis is resisted.

As used in this specification, the term "non-circular perimeter" means that the inner perimeter of the sleeve-like bearing member and the outer perimeter of the rod-like bearing member are so configured that relative rotation between the bearing members of more than a fraction of a degree is prevented.

Depending upon the desired application of a squeeze bearing assembly embodying the invention, either the sleeve-like bearing member of the rod-like bearing member may be fixed and the other bearing member may move in use. The sleeve-like bearing member may be made in part from a piezoelectric material. The rod-like bearing member may be formed from a solid block of piezoelectric material or may be hollow and provided with piezoelectric transducers on its interior surfaces. In some embodiments, both the sleeve-like bearing member and the rod-like bearing member may be formed at least in part from piezoelectric material and driven at the same or different frequencies.

In the preferred embodiment of the invention, the perimeters of the rod-like and sleeve-like bearing members preferably are spaced a constant distance from each other all around. However, the applicants have also found that a sufficient squeeze bearing effect is produced and good rotational stiffness is achieved if these perimeters together comprise a plurality of juxtaposed, perimetrically extended pairs of segments having substantially similar shapes, the transducer elements being at such segments so that relative radial vibration occurs primarily between such segments in order to generate local supporting forces and resist relative rotation of the bearing members. As used in this specification, the term "substantially similar" indicate that one closed curve and another closed curve or one segment of a curve and another segment of a curve are essentially identically shaped but differ in overall size or position.

In addition to the preferred use of piezoelectric transducers, it is also within the scope of the invention to provide the necessary relative vibration using electrostrictive, magnetostrictive and electromagnetic transducers. The presently preferred configuration for the bearing members is square or rectangular; however, it is within the scope of the invention to provide bearing members having rather arbitrary perimeters as well as bearing members having oval, oblong, rectangular, triangular, hexangular, pentangular, D-shaped and other non-circular perimeters.

How the invention can be carried out will now be described by way of example, with reference to Figures 2 to 15J of the accompanying diagrammatic drawings, in which:-

Figure 2 is a perspective view of a general example of a squeeze-bearing assembly embodying the present invention;

Figure 3A is a section on line 3A-3A of Figure 2;

Figure 3B is a section through another general example of a squeeze bearing assembly embodying the invention, in which the rod-like bearing member is hollow and the transducers are mounted on its interior surface;

Figure 4 is a section of another, general example of a squeeze bearing assembly embodying the invention in which the perimeters of the rod-like and sleeve-like bearing members comprise a plurality of juxtaposed, perimetrically extended pairs of segments having substantially similar shapes;

Figures 5 to 7 represent a squeeze bearing assembly embodying the invention subject initially to no torsional load (Figure 5), then to some torsional load (Figure 6) and finally to an excessive torsional load (Figure 7) causing contact between the bearing members;

Figure 8 is a perspective view of a first particular embodiment of a squeeze bearing assembly embodying the invention;

Figure 9 is a perspective view of a second particular embodiment of the invention;

Figure 10 is a perspective view of a third particular embodiment of the invention;

Figure 11 is a perspective view of a fourth particular embodiment of the invention;

Figure 12 is a perspective view of a fifth particular embodiment of the invention;

Figure 13 is a perspective view of a sixth particular embodiment of the invention;

Figure 14 is a perspective view of a seventh particular embodiment of the invention;

Figure 15A to 15J show various other examples of cross sectional shapes suitable for bearing members for assemblies according to the invention.

Figures 2, 3A and 3B illustrate general cases of squeeze bearing assemblies according to the invention. A rod-like bearing member 22 is provided with a cylindrical exterior surface 24 having an arbitrary, non-circular exterior perimeter 26. Slidably mounted on rod-like bearing member 22 is a sleeve-like bearing member 28 having a cylindrical interior bore 30 with a non-circular interior perimeter 32. Preferably, interior perimeter 32 is substantially similar to exterior perimeter 26. As indicated in Figure 2, bearing members 22 and 28 have a common longitudinal axis 34. As indicated in Figure 3A, the radial clearance between the bearing members preferably is constant all around.

Although a single piezoelectric transducer can be used, it is preferred to provide a plurality of transducers 36 bonded to the exterior surface 38 of bearing member 28 as shown in Figures 2 and 3A. In the illustrated example, rod-like bearing member 22 is fixed to a suitable base 40. However, it is also possible to fix the sleeve-like bearing member 28 and allow the rod-like bearing member 22 to move as shown, for example, in the embodiment of Figure 12 to be discussed subsequently. When transducer elements 36 are driven by a suitable source of power, not illustrated, bearing member 28 vibrates readially. By driving the transducer 36 at the resonant frequency of bearing member 28, a sufficient radial displacement will be established between rod-like bearing member 22 and sleeve-like bearing member 28 to cause the gas in the clearance between the bearing members alternately to be compressed and decompressed and thereby to generate a local supporting force in the squeeze bearing defined between the bearing members. An important feature of the invention is that due to the non-circular perimeter of the opposed surfaces of the bearing members, relative rotation about their common axis is resisted while nearly frictionless relative movement between the bearing members is permitted along the common axis.

In Figure 3B, an alternative general example is shown in which rod-like bearing member 22 is hollow and includes a central bore 42 within which a plurality of piezoelectric transducers 44 are mounted on the inside surface of bearing member 22. In this instance, the rod-like bearing member 22 preferably is allowed to move axially while sleeve-like bearing member 28 is fixed on a suitable base 46. By driving transducers 44 at the resonant frequency of bearing member 22, the desired squeeze bearing effect is produced in the manner previously discussed and at the same time, relative rotation between the bearing members is resisted.

In the foregoing general examples of squeeze bearing assemblies according to the invention, the radial clearance between bearing members 22 and 28 has been shown to be constant all around; however, this feature is not essential in squeeze bearing according to the invention. Figure 4 shows a sectional view of a squeeze bearing in which the sleeve-like bearing member 48 has a generally rectangular, in this case square, configuration; whereas, the rod-like bearing member 50 has a roughly octagonal configuration. The interior perimeter of bearing member 48 and the exterior perimeter of bearing 50 together comprise a plurality of juxtaposed, perimetrically extended pairs 52, 56 and 58 of perimetral segments which have substantially similar shapes. The transducers 60 are mounted on the exterior surface of sleeve-like bearing member 48 at these same segments where the radial clearance between the two bearing members is more or less uniform. However, among these pairs of segments, the radial clearance between the bearing members can vary substantially. Moreover, the individual pairs of similar perimetral segments need not all have the same geometry, so long as the segments of each pair are substantially similar.

Figures 5 to 7 illustrate, in a very simplified manner, the modes of operation of a squeeze bearing assembly according to the invention which cause it to exhibit improved torsional stiffness. A fixed rod-like bearing member 62 is surrounded by a movable sleeve-like bearing member 64 so that they share a common axis 66. For simplicity, the transducers which cause relative radial vibration between the bearing members have not been illustrated. In a typical application, the radial clearance between the bearing members would be approximately 0.001 cm and the length of each side of bearing member 62 would be approximately 0.6 cm. When relative rotation is experienced between the bearing members due to application of a torque during operation, the uniform clearance shown in Figure 5 changes substantially to the configuration of Figure 6 where several wedge-shaped volumes 68 are defined between the bearing members. When the clearance is reduced in this manner due to application of a torque t, as indicated at locations 70, an increased bearing force is generated at locations 70 which tends to resist further rotation. Of course, if enough torque is applied, bearing members 62 and 64 can be forced to touch as shown in Figure 7. In contrast to this unique mode of operation of a squeeze bearing assembly according to the invention, prior art squeeze bearing assemblies of the type illustrated in Figure 1 permit substantially unlimited relative rotation between the bearing members due to their circular perimetral configuration.

Figure 8 shows a perspective view of a first, preferred embodiment of the invention. A square, rod-like bearing member 72 is provided which may be precision machined or formed from material such as glass, ceramic or stainless steel. The material used for bearing member 72 preferably has a high specific stiffness, a low density and the capability of being machined to a good surface which will allow intermittent contact between the bearing members during start-stop conditions without resulting in undue wear. One end of rod-like bearing member 72 is fixed to a suitable support 74. In one actual embodiment of the invention, bearing member 72 was approximately 1 cm square and had a length sufficient to allow the desired movement of a square, sleeve-like bearing member 76 slidably mounted thereon. Bearing member 76 can be precision machined on its interior surface from a material such as molybdenum, for example. In one actual embodiment of the invention, bearing member 76 was 7 cm long, 1 cm square and 0.1 cm in wall thickness. Preferably, the nominal clearance between the bearing members is 0.001 cm. The surface finish of the exterior of bearing member 76 may be as much as ten times rougher than that of the interior surface without substantially affecting performance. However, if the difference in the finish of the interior and exterior surfaces is too great, the reproducability of the vibrational modes of the bearing may be rather poor.

Four PZT transducers 78 are centrally mounted on the exterior sides of bearing member 76 by means such as an epoxy cement. In one actual embodiment of the invention, transducers 78 were approximately 2 cm long, 1 cm wide and 0.08 cm thick. Each of transducers 78 is provided with a first electrode 80 which extends across the surface in contact with bearing member 76 and wraps around the ends of transducers 78 to define a pair of lead attachments pads 82, 84 which were 0.13 cm wide in one embodiment. A second electrode 86 is attached to the outer surface of each transducer 78 between lead attachment pads, 82, 84. On one of the transducers 78, a feedback electrode 88 is centrally mounted.

Pairs of conductors 90, 92 interconnect the electrodes of successive transducers 78 around the circumference of bearing member 76. A further pair of conductors 94, 96 connects the electrodes 80, 86 to a suitable source of alternating electrical power 98 which drives the transducers 78 at the resonant frequency of bearing member 76. Although the vibration of transducers 78 causes sufficient relative radial vibration to generate the desired squeeze bearing effect, those skilled in the art will understand that the amplitude and direction of vibration at any given time is not uniform around the perimeter or along the length of the bearing members. A conductor 100 connects feedback electrode 88 to a differential phase sensing circuit 102 which adjusts the frequency of power source 98 so that at resonance the phase of the feedback signal on conductor 100 is 90 degrees from that of the drive signals on conductors 94, 96. A phase-locked loop circuit can keep the bearing at the desired resonant frequency in this manner. Although it is preferred to operate the four transducers 78 at the same resonant frequency, they could be operated at different frequencies.

Various modification of the embodiment shown in Figure 8 are possible. For example, if it is desired to let bearing member 72 move and fix bearing member 76, the sleeve-like bearing member 76 can be mounted at its nodal lines 104, as shown in phantom, and support 74 can be omitted. It is also possible to form rod-like bearing member 72, at least in part, from a piezoelectric material, mounted at its nodal point, no illustrated, and to drive rod-like bearing member 72 using a separate source of alternating electrical power 106 connected to a pair of electrodes 108 on bearing member 72, by means of conductors 110, 112. In such a configuration, rod-like bearing member 72 and sleeve-like bearing member 76 can be operated at different frequencies. Finally, those skilled in the art will appreciate that transducers 78 also may be formed from electrostrictive material rather than piezoelectric material. And, as will be discussed in greater detail subsequently, sleeve-like bearing member 76 preferably will be made from glass.

Figure 9 shows a second embodiment of the invention in which rod-like bearing member 72 is hollow and provided with a central, flat sided bore 114 on which four PZT transducers 116 are mounted using a suitable epoxy cement. Transducers 116 may be connected to a suitable power source, not illustrated, and rod-like member 72 preferably is fixed. In this embodiment, bearing member 72 can be made from solid molybdenum which is precision ground on its outside surface. Sleeve-like bearing member 72 may be made from molybdenum, stainless steel or the like which has been precision machined on its inside surface. It is also within the scope of the invention to use bender element transducers of the type disclosed in EP-A1-67317. And, as in the embodiment of Figure 8, electrostrictive transducers may also be used.

Figure 10 shows a third, magnetically driven embodiment of the invention. Sleeve-like bearing member 76 is made from a suitable permeable or non-magnetic material and is fixed on mounts at its nodal lines 118, 120 as illustrated schematically. Rod-like bearing member 72 is made from a non-magnetic material and is free to move. Rather than using piezoelectric or electrostrictive transducers in the manner previously discussed, this embodiment incorporates four plates 122 or magnetic material such as ferrite, soft iron, samarium cobalt or nickel, all bonded to sleeve-like bearing member 76 at the centres of its side surfaces. Alternatively, a magnetostrictive material could be used. As shown schematically, four stationary electromagnets 124 are positioned about sleeve-like bearing member 76, one opposite each of magnetic plates 122. The electrical leads from electromagnets 124, not illustrated, are connected to a suitable source of alternating polarity current to drive sleeve-like bearing member 76 at its resonant frequency.

Figure 11 illustrates a fourth embodiment of the invention in which rod-like bearing member 72 is formed from a solid bar of PZT or electrostrictive material, precision machined on its outer surface. Sleeve-like bearing member 76 may be formed from stainless steel precision machined on its interior surface. In this embodiment, the thickness of rod-like bearing member 72 preferably is approximately one thousand times the clearance between bearing member 72 and bearing member 76. That is, the thickness of bearing member 72 is approximately 1 cm. The squeeze bearing assembly shown in Figure 11 is driven by means of a pair of electrodes 126, 128 which are electrically connected by suitable conductors 130, 132 to a source of alternating electrical power, not illustrated. Figure 12 discloses a fifth embodiment of the invention which is rather similar to that of Figure 9 except that in this instance sleeve-like bearing member 76 is fixed to a suitable base 134 and rod-like bearing member 72 is allowed to move.

Figure 13 discloses a sixth embodiment of the invention which is similar in many respects to that of Figure 11. However, in this instance rod-like bearing member 72 is fixed and comprises a base portion 136 of glass, ceramic or stainless steel, bonded to a solid central transducer portion 138 of PZT or electrostrictive material, bonded to an outer portion 140 of glass, ceramic or stainless steel. The length of central transducer portion 138 is chosen to provide the desired amplitude of vibration between bearing members 72 and 76 without overheating transducer portion 138, as will be understood by those skilled in the art.

Figure 14 discloses a seventh embodiment of the invention in which rod-like bearing member is fixed and comprises a base portion 142 of glass, ceramic or stainless steel bonded to a solid central transducer portion 144 of magnetostrictive material such as nickel, bonded to an outer portion 146 of glass, ceramic or stainless steel. Surrounding magnetostrictive portion 144 is a solenoid type drive coil 148 which is connected to a source of alternating electrical power, not illustrated. When coil 148 is energised, transducer portion 144 is caused to vibrate due to the well known magnetostrictive effect. The length of transducer portion 144 is chosen to produce the desired amplitude of vibration between bearing members 72 and 76 without overheating transducer portion 144.

Figures 15A to 15J show various other non-circular cross sectional shapes which can be used for the rod-like and sleeve-like bearing members in assemblies according to the invention. The torsional stiffness of a squeeze bearing assembly having a given cross sectional or perimetral configuration is influenced by several factors. The resulting stiffness will be the integral or sum of the stiffness for each point along the perimeter of the bearing member, as modified by a geometrical factor related to the effective moment arm. With reference to Figure 15A, for a certain point P along the perimeter of the bearing member, the factors which influence the torsional stiffness include the local bearing stiffness which is a function of deflection at the point in question and in some neighbourhood around this point; the angle b between a radius vector R from the centroid of the cross section to the point in question and a tangent T to the perimeter at this point; and the length of radius vector R.

In general, the torsional stiffness of a given cross sectional shape can be shown to decrease where the number of outwardly projecting lobes increases. This is because the cross section behaves more and more like a circular cross section which exhibits no torsional stiffness, as discussed in regard to Figure 1. In Figures 15B and 15C, the cross sections have two axes of symmetry of equal length set at 90 degrees to one another. In Figures 15D through 15F, there are two axes of symmetry of unequal length set at 90 degrees to one another. In Figures 15G through 15J, the cross sections each have three axes of symmetry which are of equal length.

While Figures 15A to 15J show a few examples of suitable cross sections, it will be recognised by those skilled in the art that there is potentially an infinite number of useful cross sections. The choice of cross section to be employed will be dependent upon the ease with which the required surfaces can be generated in a manufacturing environment and the degree of practicality of driving the active squeeze bearing member using piezoelectric or other transducer devices.

A technique useful for making a sleeve-like bearing member from glass with a variety of interior perimeters is described in copending PCT application Serial No PCT/US82/01828 filed December 30, 1982 for "Improved Long Tube Bender Squeeze Bearing, the invention of M B Caruso and R A Scranton. In accordance with such a technique, a tube of glass is provided having an interior diameter only slightly larger than the maximum transverse dimension of the desired cross-sectional configuration. A mandrel of suitable configuration and material is provided. A fixture is provided which supports the tube. Then the preheated mandrel is inserted into the tube, while the tube is held in the fixture. If necessary, a release material may be applied to the exterior surface of the mandrel to ease its subsequent removal. Heat is applied to the tube to heat the glass to its fusion temperature while vacuum is drawn on the interior of the tube. Then, when the apparatus cools, the mandrel is removed. It is also possible to precisely form the outer surface of a rod-like bearing member by providing a vacuum mould, not illustrated, having a smaller coefficient of thermal expansion than the material to be used for the rod-like member.

For example, a vacuum mould made from Invar could be used to form the rod-like bearing member from glass in whatever configuration is desired. A glass rod inserted in such a mould and raised to its fusion temperature would expand into contact with the walls of the mould and, following cooling, would be formed to a geometry exactly matching that of the mould walls.

CLAIMS

1. A squeeze bearing assembly comprising first and second coaxially arranged bearing members (22, 28) the first bearing member (22) being disposed within the second bearing member (28), and means (16, 18) to cause relative vibration of the first and second bearing members (22, 28) characterised by the bearing members having opposed surfaces (26, 32) of non-circular cross-section to cause the squeeze film created between the bearing members to restrain relative rotation of the bearing members about their common axis.

2. A squeeze bearing assembly as claimed in claim 1, in which the cross-sections of the opposed surfaces of the bearing members are symmetrical about first and second planes containing the common axis of the bearing members.

3. A squeeze bearing assembly as claimed in claim 2, in which said first and second planes are normal to one another.

4. A squeeze bearing assembly as claimed in claim 3, in which the cross-sections are of equal length in planes parallel to said first and second planes.

5. A squeeze bearing assembly as claimed in claim 4, in which the cross-sections are of a four-lobed curtate shape.

6. A squeeze bearing assembly as claimed in claim 2, in which each of the cross-sections is symmetrical about a third plane which intersects the common axis of the bearing members.

7. A squeeze bearing assembly as claimed in any preceding claim, in which the means to cause relative vibration comprises a piezoceramic transducer associated with one of the bearing members.

8. A squeeze bearing assembly comprising a sleeve-like bearing member (28) having a bore (30) with a non-circular interior perimeter (32) and an axis (34) extending through the bore; a rod-like bearing member (22) having a non-circular exterior perimeter (26), the rod-like bearing member extending through the bore (30); and means (36) for causing sufficient relative radial vibration between the sleeve-like bearing member and the rod-like bearing member, to cause fluid in the clearance between the bearing members (22, 28) alternately to be compressed and decompressed and thereby generate a load supporting force in the squeeze bearing defined between the bearing members.

9. A squeeze bearing assembly as claimed in claim 8, in which the sleeve-like bearing member is made at least in part from a piezoelectric material and the means for causing relative vibration comprises a source of alternating electrical power, a plurality of electrodes applied to the piezoelectric portion of the sleeve-like bearing member and means for electrically connecting the electrical power source to the electrodes to cause the relative vibration.

10. A squeeze bearing assembly as claimed in claim 8, in which the rod-like bearing member is made at least in part from a piezoelectric material and the means for causing relative vibration comprises a source of alternating electrical power, a plurality of electrodes applied to the piezoelectric portion of the rod-like bearing member and means for electrically connecting the electrical power source to the electrodes to cause the relative vibration.

11. A squeeze bearing assembly as claimed in claim 8, in which the bearing members are made at least in part from piezoelectric material and the means for causing relative vibration comprises a source of alternating electrical power, a plurality of electrodes applied to each of the bearing members and means for electrically connecting the electrical power source to the electrodes.

12. A squeeze bearing assembly as claimed in claim 8, in which one of the bearing members is longer than the other, is made at least in part from a piezoelectric material and is fixed relative to the other bearing member.

13. A squeeze bearing assembly as claimed in claim 8, in which the sleeve-like bearing member is fixed and made at least in part from a magnetic material; the means for causing relative vibration comprises a source of alternating magnetic force for causing the sleeve-like bearing member to vibrate; and the rod-like bearing member is slidable through the sleeve-like bearing member.

14. A squeeze bearing assembly as claimed in claim 8, in which the rod-like bearing member is fixed and formed at least in part from a magnetostrictive material; the means for causing relative vibration comprises a source of alternating magnetic force for causing the rod-like bearing member to vibrate; and the sleeve-like bearing member is slidable on the rod-like bearing member.

15. A squeeze bearing assembly as claimed in claim 14, in which the rod-like bearing member comprises a first portion of magnetostrictive material and a second, outer portion attached to the first portion; and the sleeve-like bearing member is slidable on the outer portion of the rod-like bearing member.

16. A squeeze bearing assembly as claimed in claim 8, in which the rod-like bearing member is fixed and formed from a solid piece of piezoelectric material; the means for causing relative vibration comprises a source of alternating electrical power, a plurality of electrodes applied to the rod-like bearing member and means for electrically connecting the electrodes to the electrical power source to cause the relative vibration; and the sleeve-like bearing member is slidable on the rod-like bearing member.

17. A squeeze bearing assembly as claimed in claim 8, in which the rod-like bearing member is fixed and comprises a first portion of solid piezoelectric material and a second portion of non-piezoelectric material attached to the first portion; the means for causing relative vibration comprises a source of alternating electrical power, a plurality of electrodes applied to the first portion and means for electrically connecting the electrodes to the electrical power source to cause the relative vibration; and the sleeve-like bearing member is slidable on the outer portion of the rod-like bearing member.

18. A squeeze bearing assembly as claimed in claim 8, in which the sleeve-like bearing member is made at least in part from an electrostrictive material and the means for causing relative vibration comprises a source of alternating electrical power, a plurality of electrodes applied to the electrostrictive portion of the sleeve-like bearing member and means for electrically connecting the electrical power source to the electrodes to cause the relative vibration.

19. A squeeze bearing assembly as claimed in claim 8, in which the rod-like bearing member is made at least in part from an electrostrictive material and the means for causing relative vibration comprises a source of alternating electrical power, a plurality of electrodes applied to the electrostrictive portion of the rod-like bearing member and means for electrically connecting the electrical power source to the electrodes to cause the relative vibration.

20. A squeeze bearing assembly as claimed in claim 8, in which the bearing members are made at least in part from an electrostrictive material and the means for causing relative vibration comprises a source of alternating electrical power, a plurality of electrodes applied to each of the bearing members and means for electrically connecting the electrical power source to the electrodes.

21. A squeeze bearing assembly as claimed in claim 8, in which one of the bearing members is longer than the other, is made at least in part from an electrostrictive material and is fixed relative to the other bearing member.

22. A squeeze bearing assembly as claimed in claim 8, in which the rod-like bearing member is fixed and formed from a solid piece of electrostrictive material; the means for causing relative vibration comprises a source of alternating electrical power, a plurality of electrodes are applied to the rod-like bearing member and means for electrically connecting the electrodes to the electrical power source to cause the relative vibration; and the sleeve-like bearing member is slidable on the rod-like bearing member.

23. A squeeze bearing assembly as claimed in claim 8, in which the rod-like bearing member is fixed and comprises a first portion of solid electrostrictive material and a second portion of non-electrostrictive material attached to the first portion; the means for causing relative vibration comprises a source of alternating electrical power, a plurality of electrodes applied to the first portion and means for electrically connecting the electrodes to the electrical power source to cause the relative vibration; and the sleeve-like bearing member is slidable on the outer portion of the rod-like bearing member.

24. A squeeze bearing assembly as claimed in any one of claims 9, 10, 12, 18, 19 and 21, in which the rod-like bearing member is fixed and the sleeve-like bearing member is slidable thereon.

25. A squeeze bearing assembly as claimed in any one of claims 9, 10, 12, 18, 19 and 21, in which the sleeve-like bearing member is fixed and the rod-like bearing member is slidable therethrough.

26. A squeeze bearing assembly as claimed in claim 11 or claim 20, in which the source of alternating electrical power drives the bearing members at different frequencies.

27. A squeeze bearing assembly as claimed in any of claims 8 to 26, in which the interior and exterior perimeters together comprise a plurality of juxtaposed, perimetrally extended pairs of segments having substantially similar shapes, the relative vibration occurring primarily between the segments.

28. A squeeze bearing assembly as claimed in any of claims 8 to 26, in which interior and exterior perimeters are square.

29. A squeeze bearing assembly as claimed in any of claims 8 to 26, in which the interior and exterior perimeters are symmetrical about a first plane passing through the axis.

30. A squeeze bearing assembly as claimed in claim 29, in which the interior and exterior perimeters are symmetrical about a second plane passing through the axis.

31. A squeeze bearing assembly as claimed in claim 30, in which said first and second planes intersect the interior and exterior perimeters on chords of equal length.

32. A squeeze bearing assembly as claimed in claim 30, in which said first and second planes are normal to one another.

33. A squeeze bearing assembly as claimed in claim 32, in which said first and second planes intersect the interior and exterior perimeters on chords of equal length.

34. A squeeze bearing assembly as claimed in claim 32, in which the interior and exterior perimeters are symmetrical relative to a third plane passing through the axis.

FIG. 1 - PRIOR ART

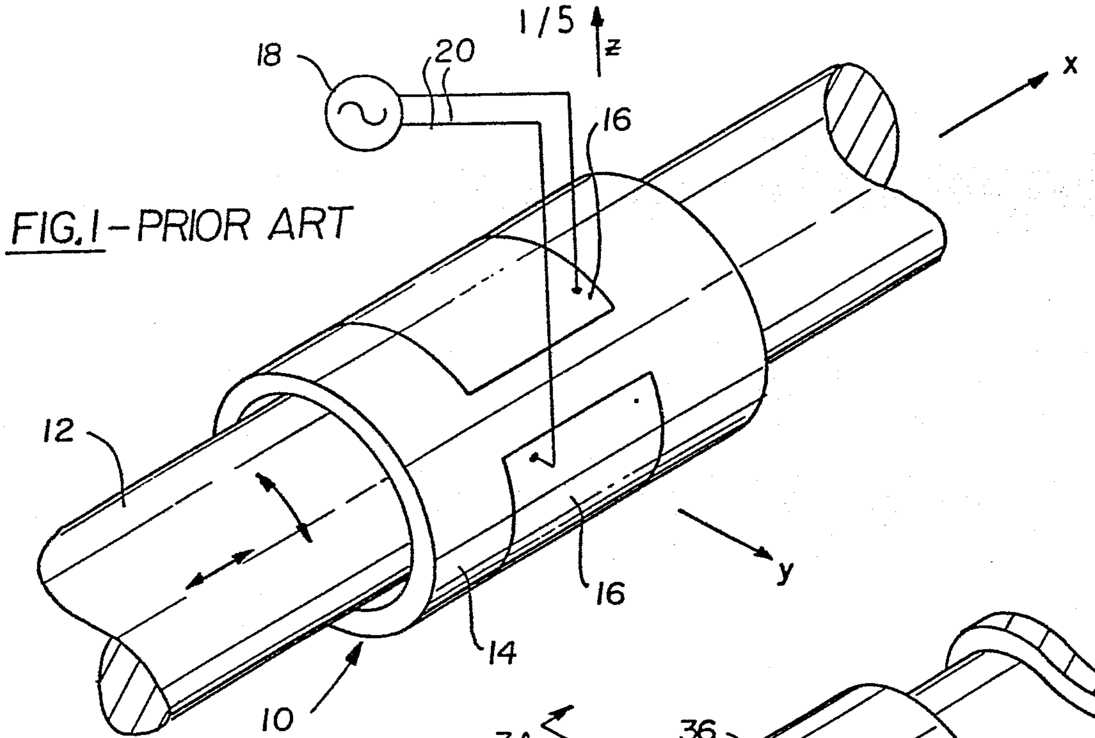


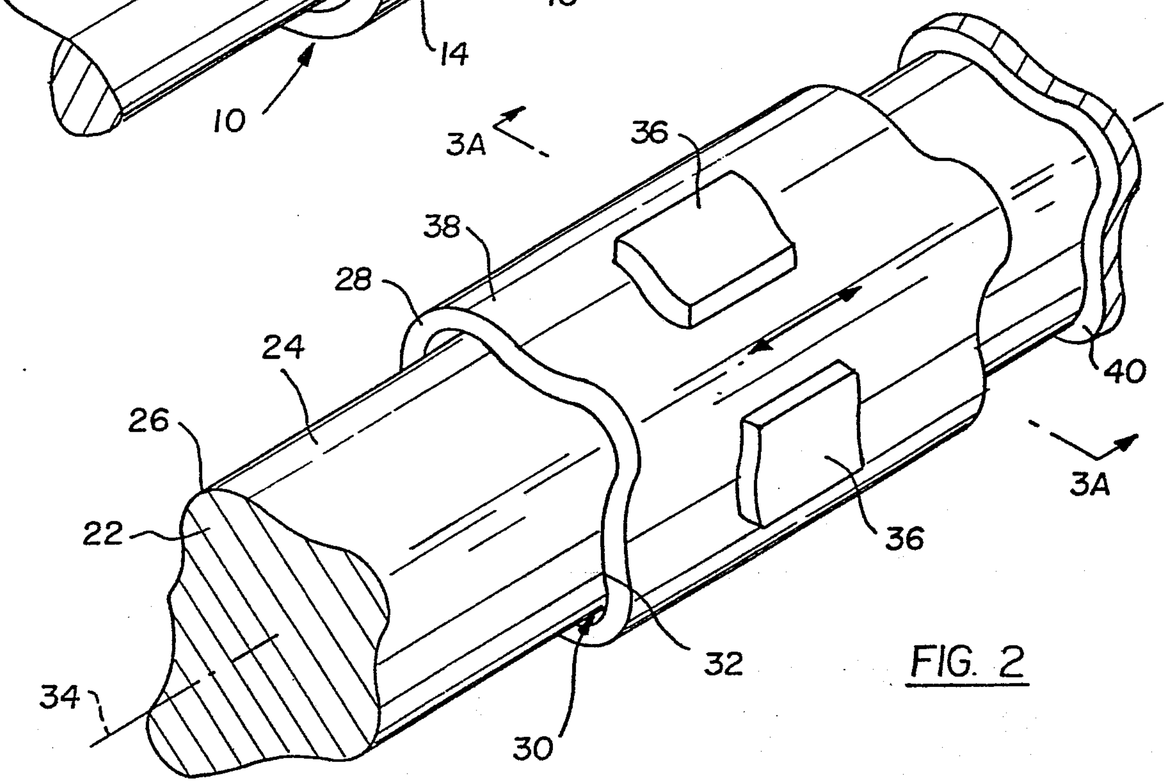


FIG. 2

FIG. 3A

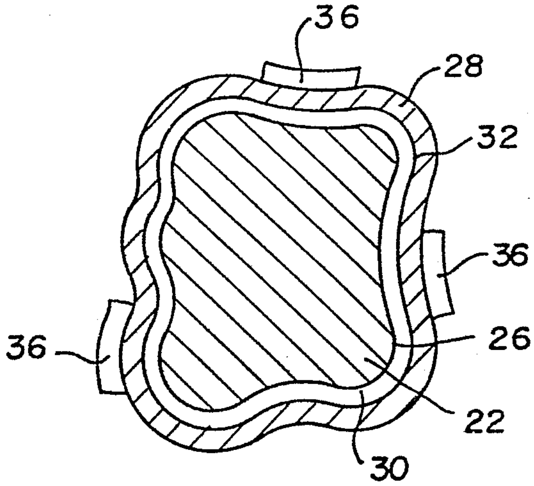


FIG. 3B

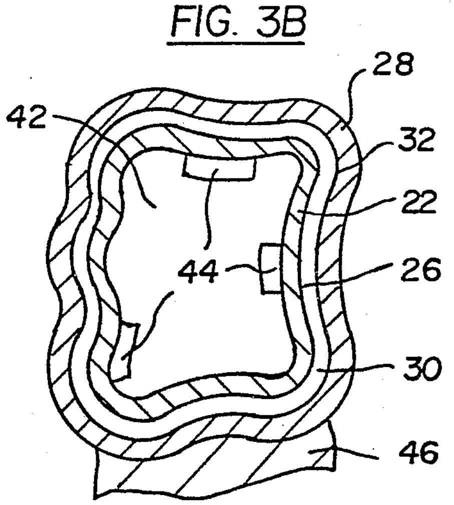

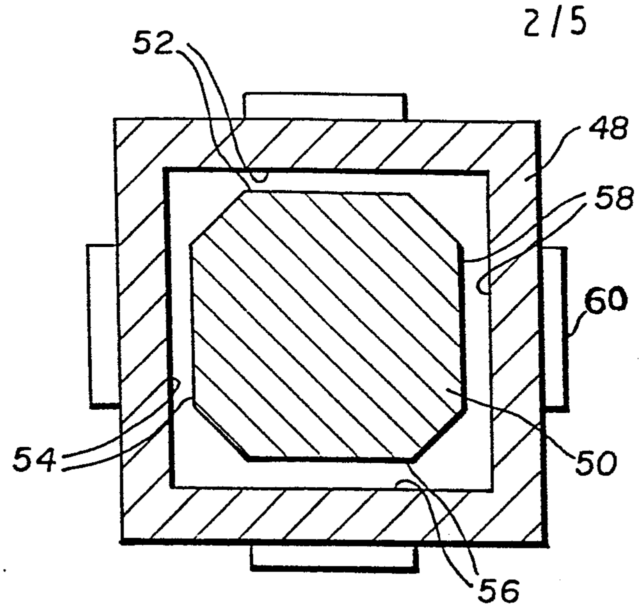


FIG. 4

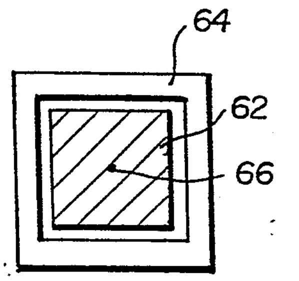


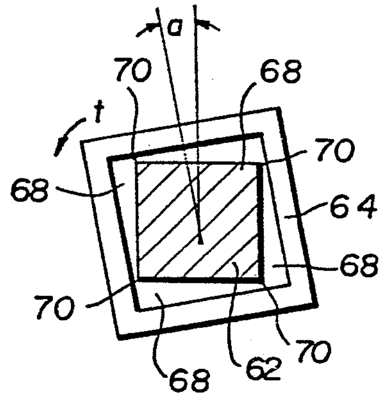


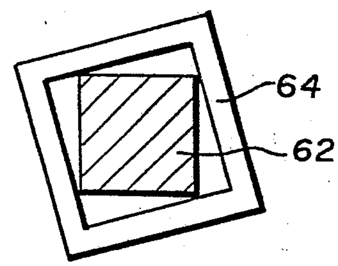


FIG. 5

FIG.6

FIG.7

FIG.8

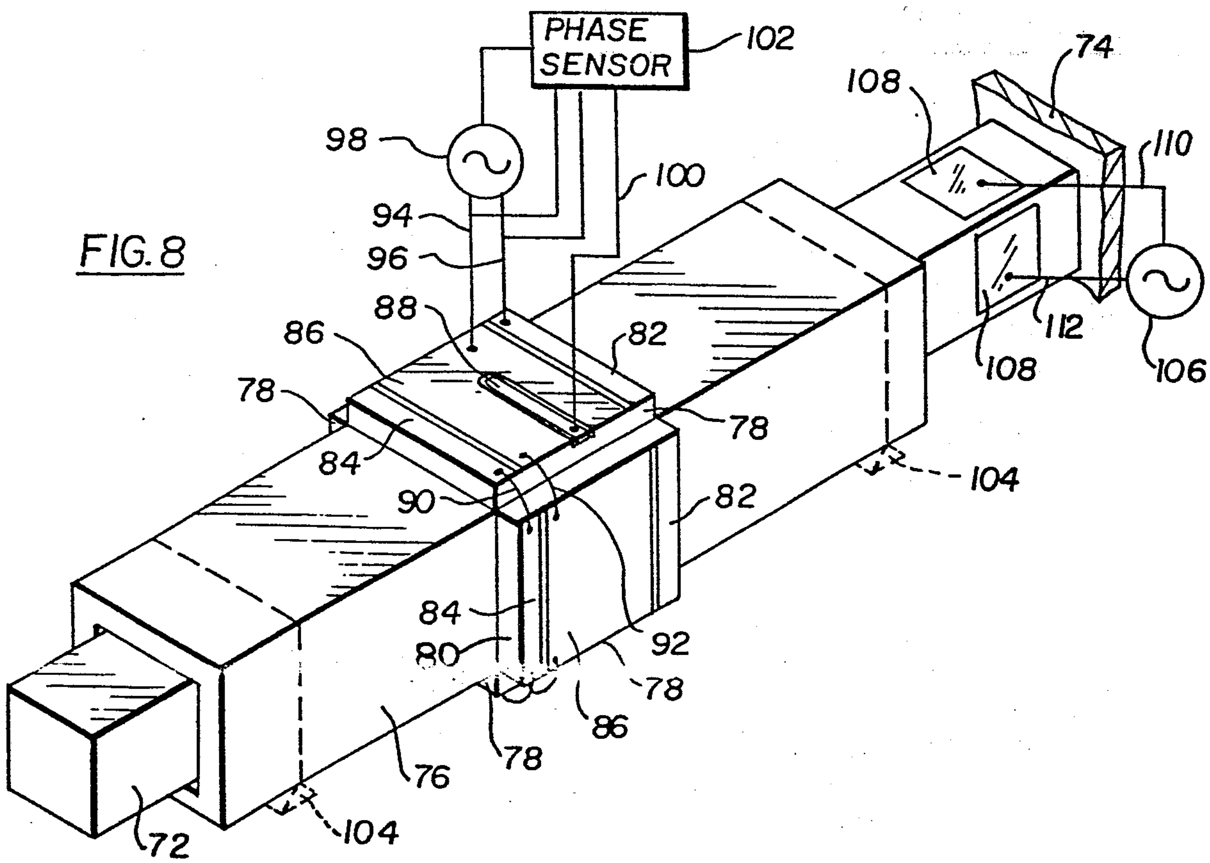

FIG. 9

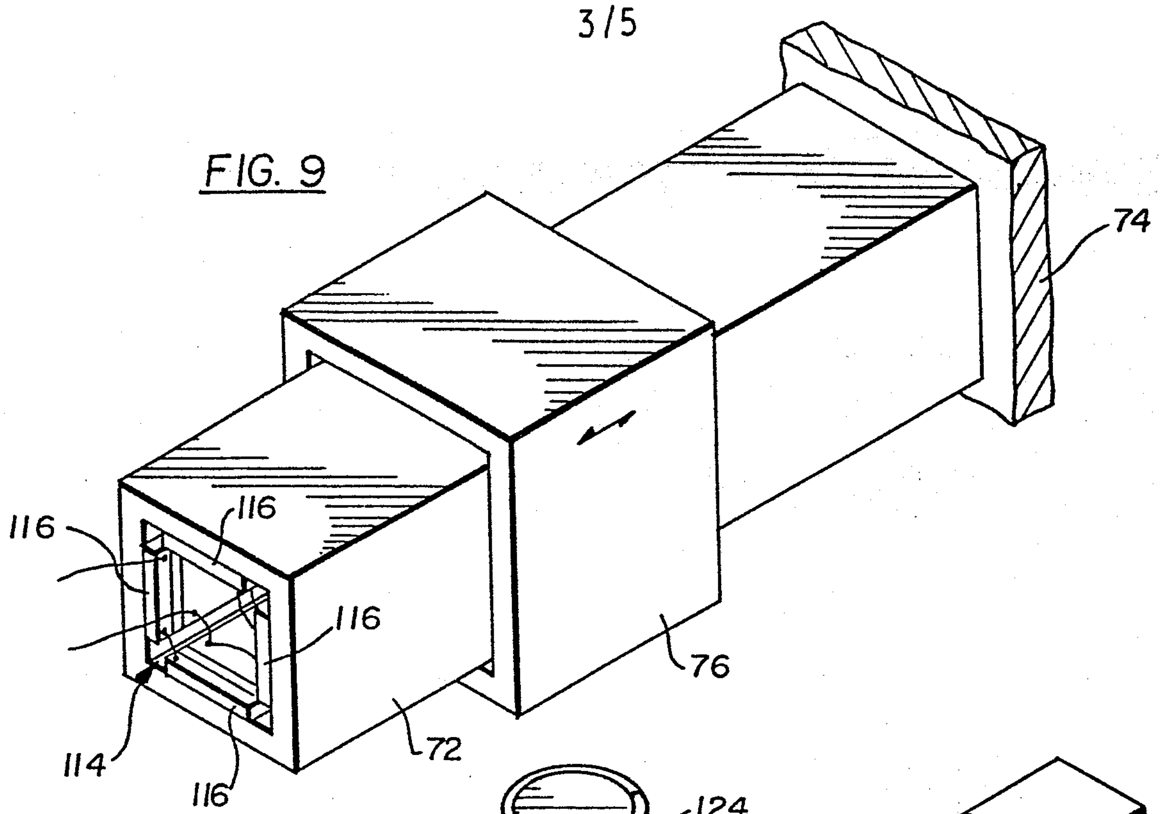


FIG. 10

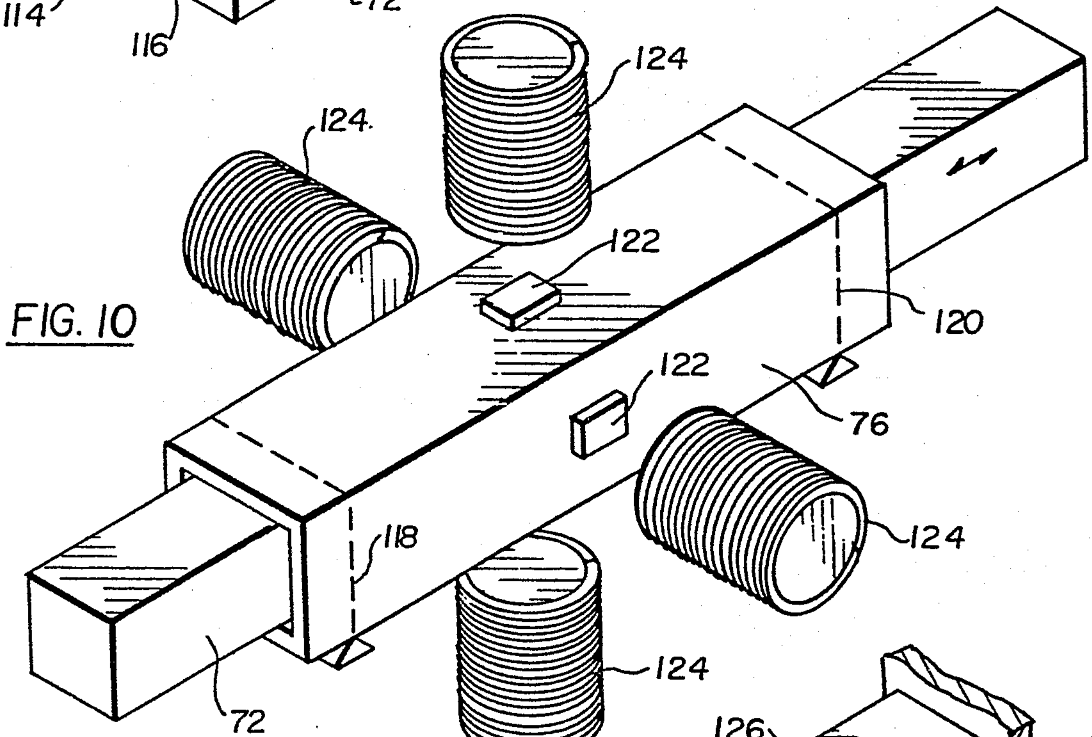


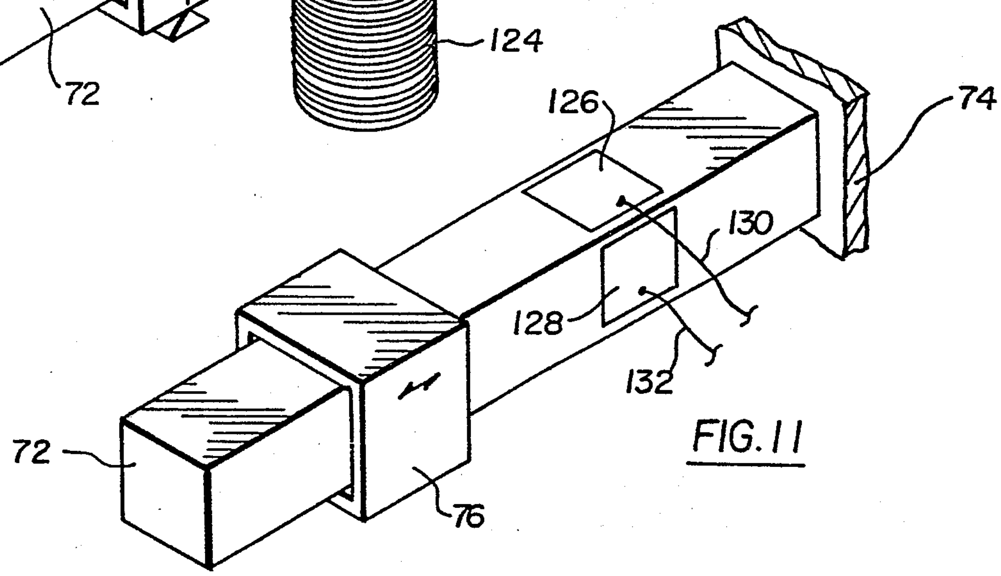


FIG. 11

FIG. 12

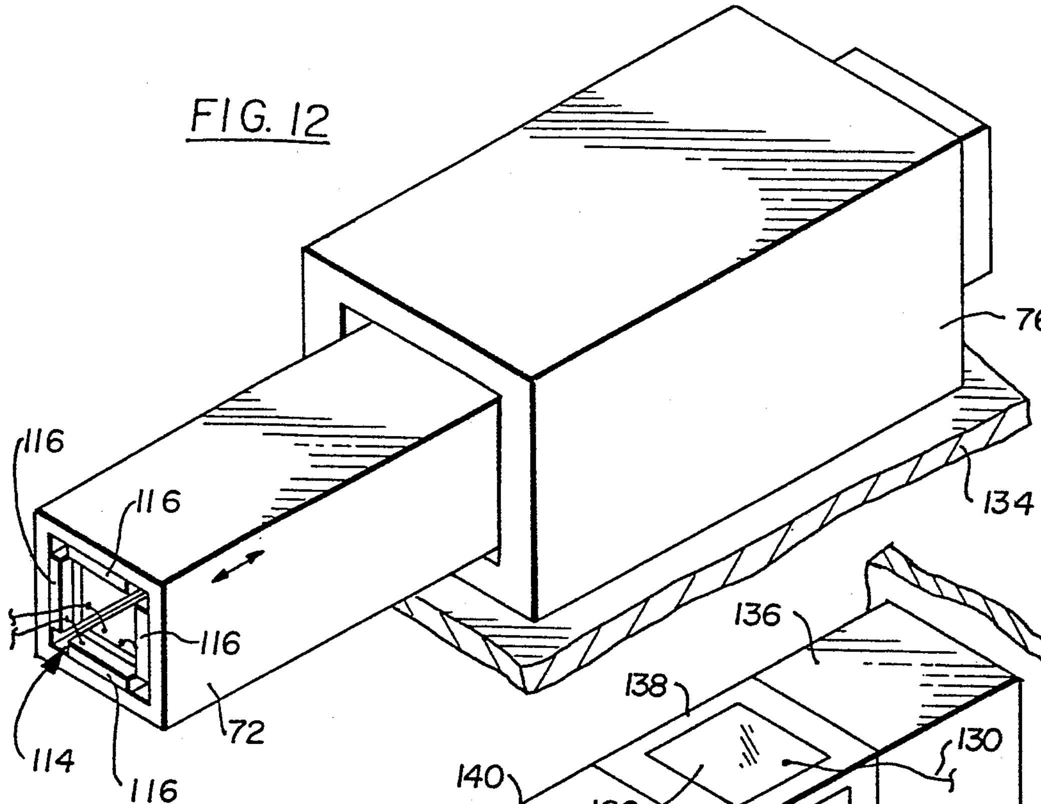


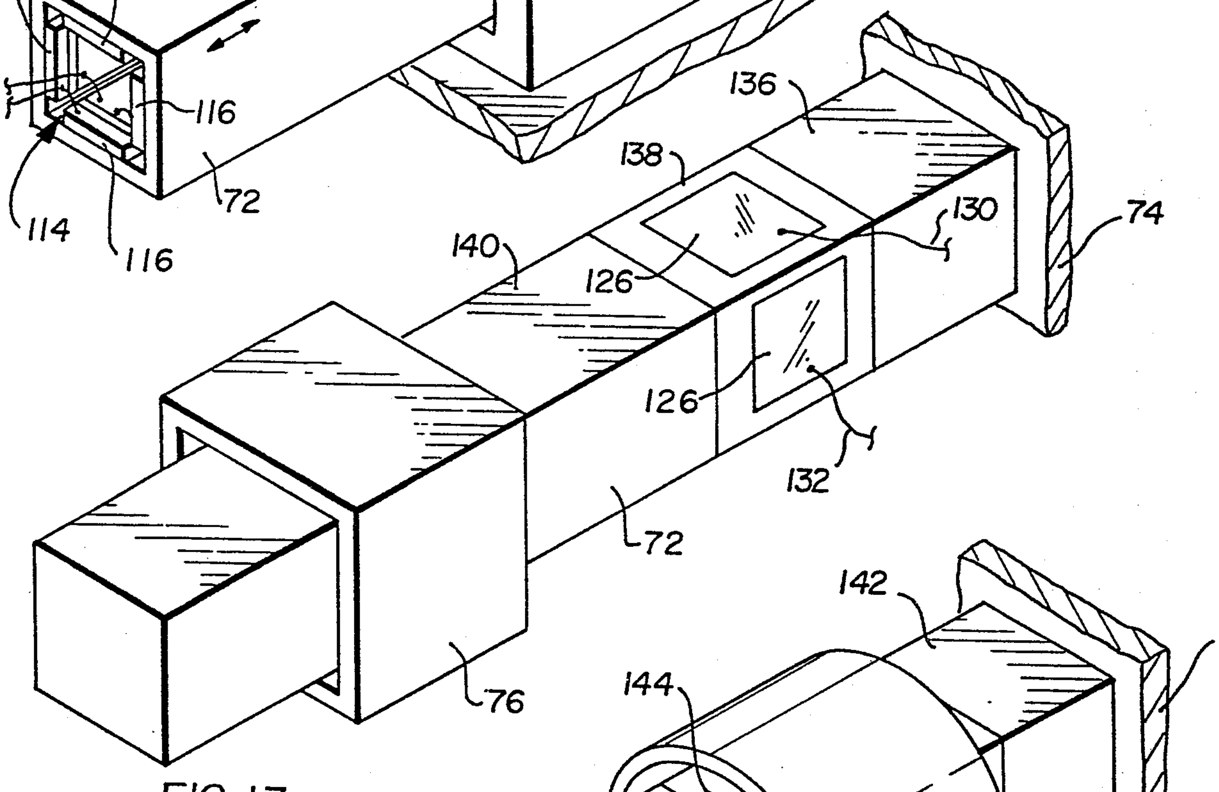


FIG. 13

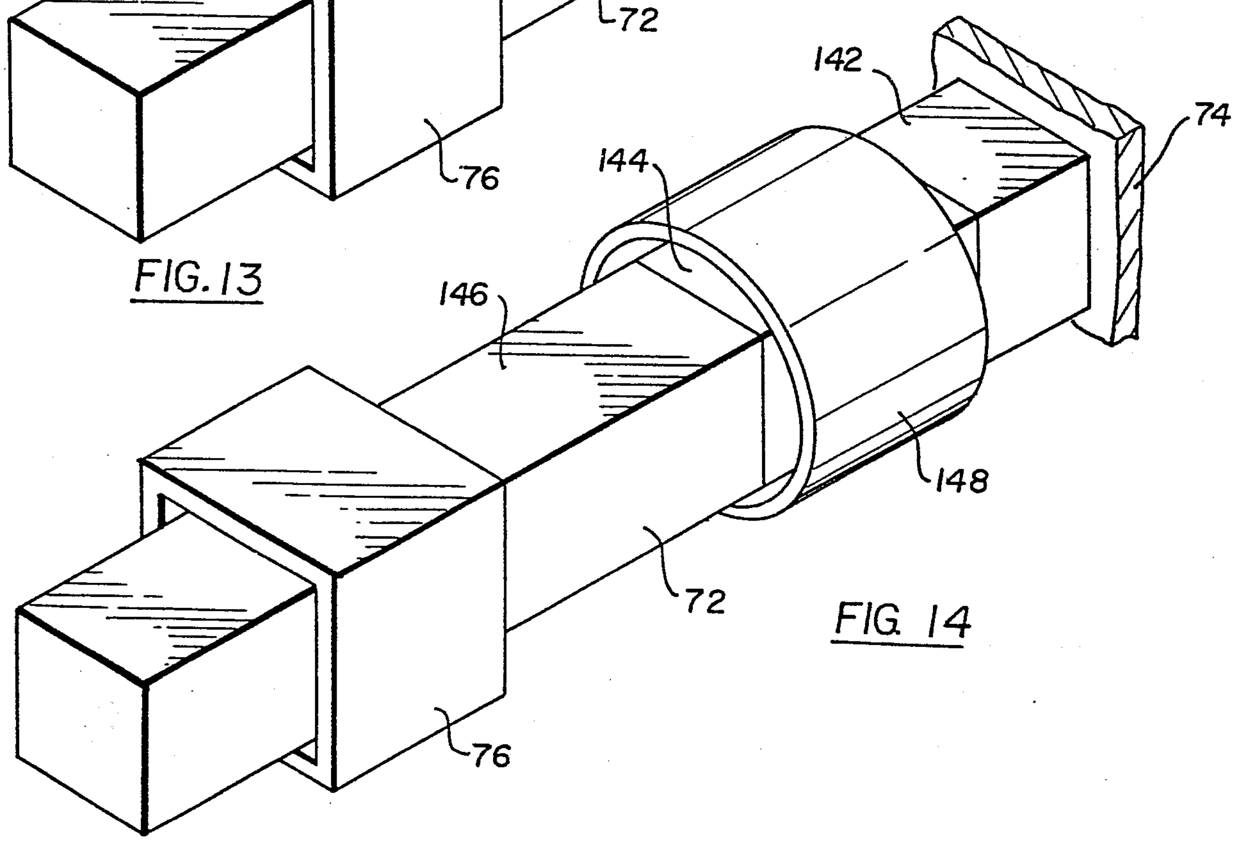


FIG. 14

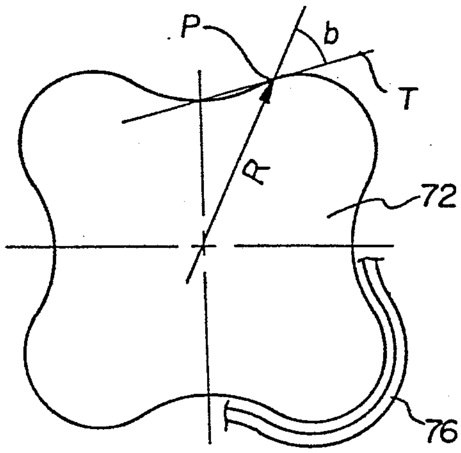


FIG 15A

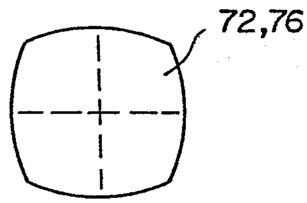


FIG 15C

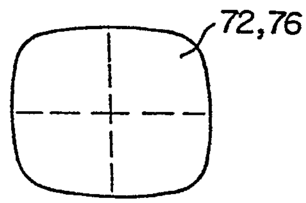


FIG 15B

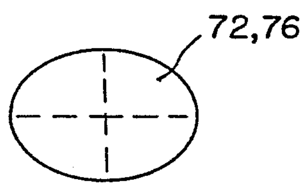


FIG 15D

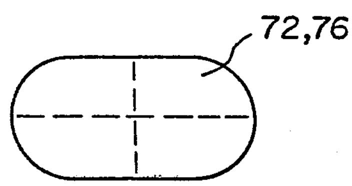


FIG.15E

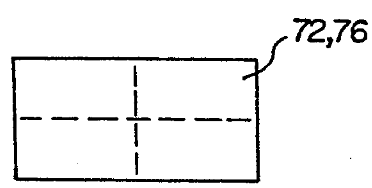


FIG 15F

FIG 15G

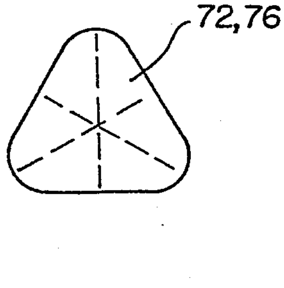


FIG 15H

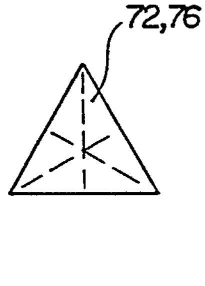


FIG 15I

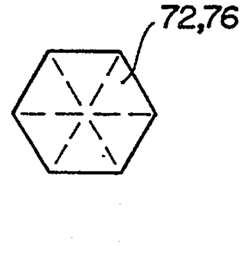


FIG 15J

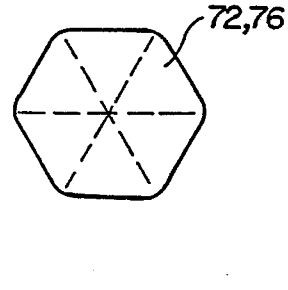

European Patent Office

# EUROPEAN SEARCH REPORT

0118278

Application number

EP 84 30 1283

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 067 317 (IBM) | | F 16 C 32/06<br>F 16 C 32/00 |
| | --- | | |
| A | DE-A-2 206 545 (POHLMAN) | | |
| | --- | | |
| A | FR-A-2 320 459 (TRW) | | |
| | --- | | |
| A | US-A-2 904 879 (WIDMER) | | |
| | --- | | |
| A | US-A-4 176 559 (WILLIAMS) | | |
| | ----- | | |
| | | | TECHNICAL FIELDS SEARCHED (Int. Cl. 3) |
| | | | F 16 C<br>H 01 L<br>H 03 H |

The present search report has been drawn up for all claims

| Place of search | Date of completion of the search | Examiner |
|---|---|---|
| THE HAGUE | 29-05-1984 | ORTHLIEB CH.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82